# EUROPÄISCHE PATENTSCHRIFT

(11) **EP 1 084 599 B1**
(45) Veröffentlichungstag und Bekanntmachung des Hinweises auf die Patenterteilung: **20.02.2002**
(21) Anmeldenummer: 99929033.1
(22) Anmeldetag: 27.04.1999
(51) Int. Cl.: H05K 13/00

(54) **VERFAHREN UND VORRICHTUNG ZUM LINEAREN POSITIONIEREN UND ZUR LAGEERKENNUNG EINES SUBSTRATES**
METHOD AND DEVICE FOR LINEAR POSITIONING AND POSITION DETECTION OF A SUBSTRATE
PROCEDE ET DISPOSITIF DE POSITIONNEMENT LINEAIRE ET DE DETECTION DE POSITION D'UN SUBSTRAT

(30) Priorität: 28.05.1998 DE 19823928
(43) Veröffentlichungstag der Anmeldung: 21.03.2001
(73) Patentinhaber: SIEMENS AKTIENGESELLSCHAFT, 80333 München (DE)
(72) Erfinder: WACKER, Josef, D-82335 Berg (DE)
(86) Internationale Anmeldenummer: DE9901245
(87) Internationale Veröffentlichungsnummer: WO9962314

(56) Entgegenhaltungen:
- EP-A- 0 826 612
- DE-A- 4 325 565
- US-A- 4 643 415

## Beschreibung

Die Erfindung bezieht sich auf ein Verfahren zum linearen Positionieren und zur Lageerkennung eines Substrates innerhalb eines Bestückfeldes eines Bestückautomaten sowie auf eine Vorrichtung zur Durchführung des Verfahrens.

Bei der automatischen Bestückung von Substraten (beispielsweise Leiterplatten oder Keramiksubstraten) mit Bauelementen (beispielsweise SMD-Bauelemente, SMD = Surface Mounted Device, oder Ball-Grad-Arrays = BGA) werden die einzelnen Bauelemente mittels eines Bestückkopfes aus einem Magazin oder einer Zuführeinrichtung entnommen und dann in einer vorgegebenen Lage auf dem Substrat positioniert. Die Substrate werden dabei aus einem Magazin entnommen, an zwei gegenüberliegenden Seiten geführt und mit Hilfe eines Lineartransports in den Bestückautomaten befördert. Für eine genaue Bestückung ist es erforderlich, daß die Position der Leiterplatte in Transportrichtung genau bekannt ist.

Aus der älteren, nicht vorveröffentlichten deutschen Patentanmeldung DE 197 38 922 A1 sind eine Vorrichtung und ein Verfahren zum Bestücken eines Leadframes mit integrierten Schaltungen bekannt. Dabei dient eine ortsfeste Detektoreinheit zum Erfassen der Position der integrierten Schaltungen und/oder der Position des Leadframes vor dem Bestücken. Mithilfe einer solchen Detektoreinheit läßt sich zwar die Position der Leiterplatte, nachdem sie bereits abgebremst wurde, erkennen, ein Verfahren zum Abbremsen der Leiterplatte ist allerdings nicht zu entnehmen.

Aus GB 2 150 098 A ist eine Maschine zum Bestücken von Substraten mit elektrischen Bauelementen bekannt, bei der die Substrate in einer Bestückposition durch mechanische Stopper angehalten werden, durch teleskopartig verfahrbare Stifte, die in Löcher der Substrate eingreifen, exakter positioniert werden und anschließend durch Klemmittel in der exakteren Position fixiert werden. Durch das abrupte Abbremsen beim Fahren gegen den mechanischen Stopper können unerwünschterweise bereits bestückte Bauelemente verrutschen. Außerdem ist die exaktere Positionierung mit den Stiften häufig für Bestückprozesse von Bauelementen mit geringem Abstand der Anschlüsse nicht genau genug.

Aus DE 43 25 565 sind ein Verfahren und eine Vorrichtung zur Beförderung eines Leiterrahmens von einem ersten Punkt zu einem zweiten Punkt bekannt, bei der der Leiterrahmen zunächst an einer ersten Stelle nach dem ersten Punkt abgebremst und in einem Klemmechanismus gehalten wird, anschließend im gehaltenen Zustand in einen Bearbeitungsraum bewegt wird, dort bearbeitet und anschließend im gehaltenen Zustand zum zweiten Punkt bewegt wird, wobei das Erreichen der jeweiligen Haltepunkte durch Sensoren detektiert wird. Durch das zweimalige Anhalten, zunächst an der ersten Stelle und dann im Bearbeitungsraum, tritt ein unerwünschter Zeitverlust gegenüber einem einmaligen Anhalten im Bearbeitungsraum auf. Außerdem wird im Bearbeitungsraum keine Positionserkennung der tatsächlichen Lage des Leiterrahmens mehr durchgeführt, was vor allem bei Bauelementen mit sehr geringen Abständen zwischen den Anschlüssen zu ungenau ist.

Aus DE 36 30 178 A1 ist eine rechnergesteuerte Montageeinrichtung bekannt, die auch zur Leiterplattenbestückung verwendet wird. Die Leiterplatten werden dabei auf Werkstückträger gelegt, die auf Transportstationen zu einzelnen Arbeitsstationen bewegt werden. Dabei detektieren Fotosensoren die Anwesenheit von Werkstückträgern und mittels eines Justierstiftes wird der Werkstückträger genauer positioniert. Über den Abbremsvorgang selbst sind keine Angaben gemacht. Die Positionierung mit den Justierstiften ist teilweise zu ungenau.

Desweiteren werden für die Erkennung von Leiterplatten beispielsweise Ultraschallreflextaster benutzt, die eine transportierte Leiterplatte erkennen. Daraufhin wird der Lineartransport abgebremst und das Substrat wird mit geringer Geschwindigkeit gegen einen einfahrbaren, mechanischen Stopper gefahren. Anstelle des Ultraschallreflextasters werden manchmal auch Reflexlichtsensoren verwendet. Verschiedene Leiterplatten oder keramische Substrate weisen dabei eine unterschiedliche Transparenz für das verwendete Licht und damit unterschiedliche Reflexionseigenschaften auf. Daher sind die verwendeten Ultraschallreflextaster bzw. Reflexlichtsensoren nicht für alle Substrate einsetzbar. Darüber hinaus ist es nachteilig, daß bei diesem Verfahren alle Substrate gegen einen festpositionierten mechanischen Stopper gefahren werden, so daß teilweise mit dem Bestückkopf längere Transportwege zu fahren sind, als es bei kleinen Substraten beispielsweise in Abhängigkeit von der Position der Zuführeinrichtungen nötig wäre. Außerdem erfahren die Substrate beim abrupten Abbremsen durch den mechanischen Stopper eine Beschleunigung, die zum Verrutschen bereits bestückter Bauelemente führen kann.

Es ist daher die Aufgabe der Erfindung, ein Verfahren und eine Vorrichtung zur Durchführung des Verfahrens anzugeben, um Substrate unabhängig von ihrem Material und ihrer räumlichen Ausdehnung so im Bestückautomaten zu positionieren, daß möglichst geringe Verfahrwege mit dem Bestückkopf erforderlich sind.

Die Aufgabe wird erfindungsgemäß mit einem Verfahren mit den Merkmalen des Patentanspruchs 1 sowie eine Vorrichtung zur Durchführung des Verfahrens mit den Merkmalen des Patentanspruchs 4 gelöst.

Durch die Verwendung eines Sensors mit einem Sensorfeld, das im wesentlichen das Bestückfeld des Bestückautomaten umfaßt, läßt sich die Position eines Substrats im gesamten Bestückfeld bestimmen. Der Sensor wird zunächst so angeordnet, daß ein in das Bestückfeld transportiertes Substrat an einer Bremsposition (auch Bremsbeginnposition genannt) vom Sensor erkannt wird. Zum Erkennen dient ein vorgegebenes Substratmerkmal, beispielsweise die Vorderkante des Substrats, ein auf einer vorgegebenen Stelle des Substrates angebrachter Balkencode oder auch auf dem Substrat angeordnete Anschlüsse (Pads) oder andere lichtundurchlässige Stellen des Substrats. Nachdem der Sensor das Substratmerkmal erkannt hat, wird der Lineartransport abgebremst, so daß das Substrat in einer Bestückposition (auch Ruheposition genannt) zur Ruhe kommt. Der Sensor detektiert die Position des Substratmerkmals an der Bestückposition, so daß die Lage des Substrats bekannt ist.

In vorteilhafter Weise wird gemäß Anspruch 2 die Positionsbestimmung des Substratmerkmals an der Bestückposition dazu benutzt, einen optischen Justiersensor in den Bereich von auf dem Substrat angebrachten Justiermarken für eine noch genauere Positionsbestimmung zu verfahren.

Besonders einfach gestaltet sich das Verfahren gemäß Anspruch 3, indem die Frontkante des Substrats als Substratmerkmal erkannt wird.

Durch die Verwendung eines optischen Sensors gemäß Anspruch 5 lassen sich unterschiedliche Substratmerkmale, wie Frontkante oder Balkencodes, einfach erkennen.

In einer bevorzugten Ausgestaltung der Vorrichtung nach Patentanspruch 6 ist der Sensor fest mit einem oberhalb des Substrats verfahrbaren Bestückkopf verbunden, so daß der Sensor und damit das Sensorfeld einfach auf die frei wählbaren Bremspositionen des Transportweges einstellbar ist.

Besonders vorteilhaft ist die Anordnung gemäß Patentanspruch 7, bei der der am Bestückkopf normalerweise zur Erkennung von Justiermarken angeordnete Justiersensor als Sensor zur Erkennung des Substratmerkmals dient, wodurch die Kosten für einen zusätzlichen Sensor eingespart werden.

Durch die Anordnung einer nach oben gerichteten Lichtquelle gemäß Patentanspruch 7 läßt sich in vorteilhafter Weise ein einfacher optischer Sensor zur Erkennung der Substratmerkmale am Bestückkopf verwenden.

Ausführungsbeispiele der Erfindung werden anhand der Zeichnung näher beschrieben. Dabei zeigen
Figur 1 schematisch eine Seitenansicht eines Bestückautomaten mit einem Substrat, das in den Bestückautomaten verfahren wird,
Figur 2 eine schematische Seitenansicht eines Bestückautomaten, bei dem ein Substratmerkmal der Leiterplatte an einer Bremsposition detektiert wird und
Figur 3 eine schematische Seitenansicht eines Bestückautomaten, bei dem ein abgebremstes Substrat an einer Bestückposition genauer vermessen wird.

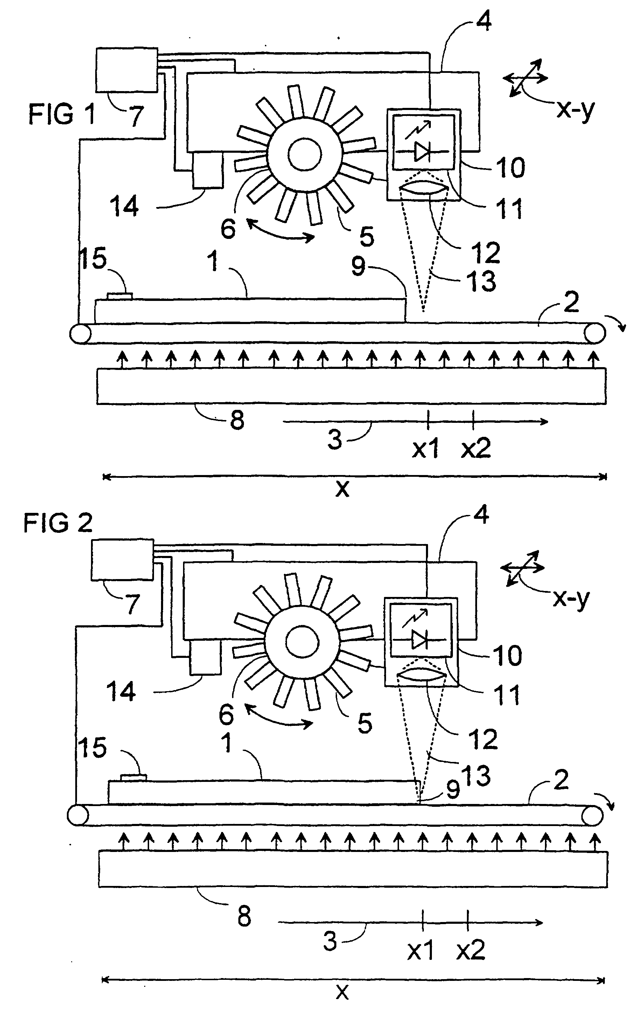

In Figur 1 ist dargestellt, wie ein Substrat 1 (beispielsweise eine Leiterplatte oder ein keramisches Substrat) auf einem Lineartransport 2 in einen Bestückautomaten in der Transportrichtung 3 verfahren wird. Der Bestückbereich des Bestückautomaten ist mit x gekennzeichnet. An einem in XY-Richtung beweglichen Bestückkopf 4 sind in diesem Beispiel eine Befestigungsvorrichtung 6 für mehrere Saugpipetten 5 sowie ein Sensor 10 und ein Justiersensor 14 befestigt. Die Saugpipetten 5 dienen dabei der Aufnahme von nicht dargestellten Bauelementen aus nicht dargestellten Zuführeinheiten und dem Positionieren dieser Bauelemente auf dem Substrat 1. Der Lineartransport 2, der Justiersensor 14, der Bestückkopf 4 sowie der Sensor 10 sind dabei mit einer Steuereinrichtung 7 verbunden. Der Sensor 10 ist hierbei als optischer Sensor ausgebildet, mit einem Detektor 11 und einer optischen Abbildungseinrichtung 12, die ein Sensorfeld 13 erzeugt, welches an einer frei wählbaren Bremsposition x1 positioniert ist. Eine ortsfeste Lichtquelle 8, insbesondere eine Weißlichtquelle, die sich vorzugsweise über den gesamten Bestückbereich x erstreckt, ist unterhalb des Lineartransports 2 angebracht und beleuchtet das Substrat 1 von unten. Dabei können Lichtquellen mit einer in erster Linie linearen Ausdehnung als auch teilweise flächig ausgestaltete Lichtquellen zum Einsatz kommen, um beispielsweise Substrate mit Aussparungen zu erkennen. Zur genauen Positionierung des Substrats sind auf dem Substrat 1 Justiermarken 15 vorgesehen.

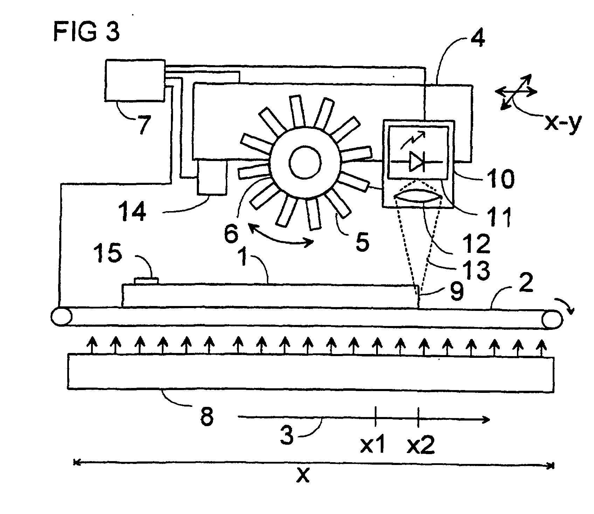

In Figur 2 ist dargestellt, daß die Vorderkante des Substrats 1 als Substratmerkmal 9 an der Bremsposition X1 vom Sensor 10 erkannt wird. Der Lineartransport 2 wird über die Steuereinrichtung 7 abgebremst, so daß, wie in Figur 3 dargestellt, das Substrat mit dem Substratmerkmal 9 in einer Bestückposition x2 angehalten wird. Zur genauen Untersuchung der Bestückposition x2 wird der Sensor 10 mit Hilfe des in XY-Richtung verfahrbaren Bestückkopfes 4 mit seinem Sensorfeld 13 an die Bestückposition x2 verfahren und vermißt die genaue Lage des Substrats 1. Aufgrund dieser Lagevermessung läßt sich die Position der Justiermarken 15 des Substrats 1 berechnen, so daß der Justiersensor 14 über die Justiermarken 15 verfahren werden kann, wodurch eine hochgenaue Lagebestimmung des Substrats 1 erfolgt. Durch die genaue Lagebestimmung des Substrats 1 läßt sich dieses nun hochgenau mit Bauelementen bestücken. Durch die seitliche Führung der Substrate 1 in Bestückautomaten reicht die genaue Positionserkennung in Transportrichtung 3 für die Lageerkennung aus.

Je nach Substratgröße läßt sich mit diesem Verfahren die Position des Substrats 1 auf kurze Bestückwege optimieren, so daß kurze Bestückzeiten und damit hohe Bestückleistungen erzielt werden.

## Patentansprüche

1. Verfahren zum linearen Positionieren und zur Lageerkennung eines Substrates (1) innerhalb eines Bestückfeldes eines Bestückautomaten mittels eines Lineartransports (2), wobei
ein auf das Substrat (1) gerichtetes Sensorfeld (13) auf eine frei wählbare Bremsbeginnposition (x1) auf dem Transportweg eines Substratmerkmals (9) des Substrats (1) innerhalb des Bestückfeldes (x) eingestellt wird,
der Lineartransport (2), nachdem das Substratmerkmal (9) die Bremsbeginnposition (x1) durchlaufen hat und im Sensorfeld (13) dabei das Substratmerkmal (9) erkannt wurde, bis zum annähernden Erreichen einer Ruheposition (x2) definiert abgebremst wird,
nach dem Abbremsen des Lineartransportes (2) das Sensorfeld (13) annähernd auf die Ruheposition (x2) des Substratmerkmals (9) des gestoppten Substrats (1) eingestellt wird und
die Ruheposition (x2) des ruhenden Substratmerkmals (9) zur Lageerkennung bestimmt wird.

2. Verfahren zum linearen Positionieren und zur Lageerkennung eines Substrates (1) nach Anspruch 1,
**dadurch gekennzeichnet,**
**daß** anhand der Posit:ionsdaten des ruhenden Substratmerkmals (9) ein optischer Justiersensor (14) in den Bereich von Justiermarken (15) verfahren wird.

3. Verfahren zum linearen Positionieren und zur Lageerkennung eines Substrates (1) nach einem der Ansprüche 1 oder 2,
**dadurch gekennzeichnet,**
**daß** als Substratmerkmal (9) die Frontkante des Substrates (1) vom Sensor (10) erfaßt wird.

4. Vorrichtung zum linearen Positionieren und zur Lageerkennung eines Substrates (1), insbesondere zur Durchführung des Verfahrens nach einem der Ansprüche 1 bis 3,
mit einem Lineartransport (2) zum Transport des Substrats (1),
mit einem Sensor (10), dessen Sensorfeld (13) auf eine frei wählbare Bremsbeginnposition (x1) auf dem Transportweg eines Substratmerkmals (9) des Substrats (1) sowie auf eine Ruheposition (x2) des Substratmerkmals (9) zur Lageerkennung des Substrats (1) einstellbar ist,
und mit einer mit dem Lineartransport (2) und dem Sensor (10) verbundenen Steuereinrichtung (7) zum Abbremsen nach dem Erkennen des Substratmerkmals (9) an der Bremsbeginnposition (x1) durch den Sensor (10) und Anhalten des Lineartransports (2), so daß das Substratmerkmal in der Ruheposition (x2) zur Ruhe kommt.

5. Vorrichtung nach Anspruch 4,
**dadurch gekennzeichnet,**
**daß** der Sensor (10) als optischer Sensor (11,12) ausgebildet ist.

6. Vorrichtung nach einem der Ansprüch 4 oder 5,
**dadurch gekennzeichnet,**
**daß** der Sensor (10) fest mit einem oberhalb des Substrates (1) verfahrbaren Bestückkopf (3) des Bestückautomaten verbunden ist.

7. Vorrichtung nach einem der Ansprüche 4 bis 6,
**dadurch gekennzeichnet,**
**daß** der am Bestückkopf (4) angeordnete Justiersensor (14) als Sensor (10) zur Erkennung des Substratmerkmals (9) dient.

8. Vorrichtung nach einem der Ansprüche 4 bis 7,
**dadurch gekennzeichnet,**
**daß** eine unterhalb des Substrats (1) ortsfest angeordnete, nach oben gerichtete Lichtquelle (8) den gesamten frei wählbaren Positionierbereich der Substratmerkmale (9) unterschiedlicher Substrate (1) beleuchtet.

## Claims

1. Method for positioning a substrate (1) linearly and detecting its position within an assembly field of a pick-and-place robot by means of a linear transport (2),
a sensor field (13) oriented towards the substrate (1) being set to a freely selectable braking start position (x1) on the transport path of a feature (9) of the substrate (1) within the assembly field (x),
the linear transport (2), after the substrate feature (9) has passed through the braking start position (x1) and the substrate feature (9) has been detected in the sensor field (13), being braked in a defined manner until it approximately reaches a rest position (x2),
after the braking of the linear transport (2), the sensor field (13) being set approximately to the rest position (x2) of the feature (9) of the stopped substrate (1), and the rest position (x2) of the stationary substrate feature (9) being determined in order to detect the position.

2. Method for positioning a substrate (1) linearly and detecting its position according to Claim 1, **characterized in that** by using the position data about the stationary substrate feature (9), an optical adjustment sensor (14) is moved into the area of adjustment marks (15).

3. Method for positioning a substrate (1) linearly and detecting its position according to either of Claims 1 and 2, **characterized in that** as the substrate feature (9), the front edge of the substrate (1) is registered by the sensor (10).

4. Apparatus for positioning a substrate (1) linearly and detecting its position, in particular for implementing the method according to one of Claims 1 to 3,
having a linear transport (2) to transport the substrate (1),
having a sensor (10) whose sensor field (13) can be set to a freely selectable braking start position (x1) on the transport path of a feature (9) of the substrate (1) and to a rest position (x2) of the substrate feature (9) to detect the position of the substrate (1),
and having a control device (7), connected to the linear transport (2) and the sensor (10), to brake and stop the linear transport (2) after the detection of the substrate feature (9) at the braking start position (x1) by the sensor (10), so that the substrate feature comes to rest in the rest position (x2).

5. Apparatus according to Claim 4, **characterized in that** the sensor (10) is constructed as an optical sensor (11, 12).

6. Apparatus according to either of Claims 4 and 5, **characterized in that** the sensor (10) is firmly connected to an assembly head (3) which belongs to the pick-and-place robot and can be moved above the substrate (1).

7. Apparatus according to one of Claims 4 to 6, **characterized in that** the adjustment sensor (14) arranged on the assembly head (4) is used as a sensor (10) for detecting the substrate feature (9).

8. Apparatus-according to one of Claims 4 to 7, **characterized in that** a light source (8) which is arranged to be stationary underneath the substrate (1) and is directed upward illuminates the entire freely selectable positioning area of the features (9) of different substrates (1).

## Revendications

1. Procédé de positionnement linéaire et de détection de position d'un substrat (1) à l'intérieur d'un champ de montage d'une machine automatique de mise en place au moyen d'un dispositif de transport linéaire (2), un champ de détection (13) dirigé vers le substrat (1) étant réglé sur une position de début de freinage (x1) pouvant être sélectionnée librement sur le trajet de transport d'une caractéristique de substrat (9) du substrat (1) à l'intérieur du champ de montage (x),
le dispositif de transport linéaire (2) étant ralenti de manière définie jusqu'à ce que soit approximativement atteinte une position de repos (x2) après que la caractéristique de substrat (9) ait franchi la position de début de freinage (x1) et, ce faisant, ait été détectée dans le champ de détection (13),
le champ de détection (13) étant réglé, après le ralentissement du dispositif de transport linéaire (2), approximativement sur la position de repos (x2) de la caractéristique de substrat (9) du substrat (1) arrêté, et la position de repos (x2) de la caractéristique de substrat (9) immobilisée étant déterminée afin de détecter sa position.

2. Procédé de positionnement linéaire et de détection de position d'un substrat (1) selon la revendication 1, **caractérisé en ce qu'**un capteur optique d'ajustement (14) est déplacé, sur la base des données de position de la caractéristique de substrat (9) immobilisée, dans la zone de marques d'ajustement (15).

3. Procédé de positionnement linéaire et de détection de position d'un substrat (1) selon l'une des revendications 1 ou 2, **caractérisé en ce que** le capteur (10) saisit, en tant que caractéristique de substrat (9), l'arête antérieure du substrat (1).

4. Dispositif de positionnement linéaire et de détection de position d'un substrat (1), en particulier pour l'exécution du procédé selon l'une des revendications 1 à 3,
comprenant un dispositif de transport linéaire (2) pour le transport du substrat (1),
un capteur (10), dont le champ de détection (13) peut être réglé sur une position de début de freinage (x1) pouvant être sélectionnée librement sur le trajet de transport d'une caractéristique de substrat (9) du substrat (1), ainsi que sur une positon dé repos (x2) de la caractéristique de substrat (9) en vue de la détection de position du substrat (1),
et un dispositif de commande (7) relié au dispositif de transport linéaire (2) et au capteur (10), qui sert au ralentissement après la détection par le capteur (10) de la caractéristique de substrat (9) au niveau de la position de début de freinage (x1), et à l'arrêt du dispositif de transport linéaire (2) de manière à ce que la caractéristique de substrat s'immobilise dans la position de repos (x2).

5. Dispositif selon la revendication 4, **caractérisé en ce que** le capteur (10) est exécuté en tant que capteur optique (11, 12).

6. Dispositif selon l'une des revendications 4 ou 5, **caractérisé en ce que** le capteur (10) est relié fixement à une tête de mise en place (4) de la machine automatique de mise en place qui est mobile au-dessus du substrat (1).

7. Dispositif selon l'une des revendications 4 à 6, **caractérisé en ce que** le capteur d'ajustement (14) situé sur la tête de mise en place (4) sert de capteur (10) de détection de la caractéristique de substrat (9).

8. Dispositif selon l'une des revendications 4 à 7, **caractérisé en ce qu'**une source lumineuse (8) dirigée vers le haut et située à un endroit fixe au-dessus du substrat (1) éclaire toute la zone des positions pouvant être sélectionnées librement pour les caractéristiques de substrat (9) de différents substrats (1).
